# EUROPÄISCHE PATENTANMELDUNG

(11) **EP 2 604 455 A1**
(43) Veröffentlichungstag der Anmeldung: **19.06.2013**
(21) Anmeldenummer: 12194462.3
(22) Anmeldetag: 27.11.2012
(51) Int. Cl.: B60G 21/055

(54) **Stabilisatoranordnung für ein Kraftfahrzeug und Verfahren zur Herstellung eines Stabilisatorabschnitts**

(30) Priorität: 13.12.2011 DE 102011056340
(71) Anmelder: Benteler Automobiltechnik GmbH, 33102 Paderborn (DE)
(72) Erfinder: Smatloch, Dr. Christian, 33100 Paderborn (DE)
(74) Vertreter: Ksoll, Peter

(57) **Zusammenfassung**

Die Erfindung betrifft eine Stabilisatoranordnung, umfassend einen Aktuator und mindestens einen Stabilisatorabschnitt 1 sowie ein Verfahren zur Herstellung eines Stabilisatorabschnitts 1 für eine Stabilisatoranordnung. Der zumindest eine Stabilisatorabschnitt 1 weist einen Rohrkörper 3 und einen an einem Ende 8 des Rohrkörpers 3 festgelegtes Flanschbauteil 2 auf, wobei das Flanschbauteil 2 einen Zapfen 6 besitzt, auf welchen das Ende 8 des Rohrkörpers 3 geschoben ist. Das Flanschbauteil 2 und der Rohrkörper 3 sind reib-drück-technisch verschweißt. Hierzu werden das Flanschbauteil 2 und der Rohrkörper 3 relativ zueinander gedreht und axial aufeinander zubewegt, wobei der Zapfen 6 des Flanschbauteils 2 und das Ende 8 des Rohrkörpers 3 in Reibkontakt stehend aufeinander gedrückt und reibverschweißt werden.

## Beschreibung

Die Erfindung betrifft eine Stabilisatoranordnung für ein Kraftfahrzeug gemäß den Merkmalen im Oberbegriff von Anspruch 1 sowie ein Verfahren zur Herstellung eines Stabilisatorabschnitts für eine Kraftfahrzeug-Stabilisatoranordnung gemäß den Merkmalen im Oberbegriff von Anspruch 6.

Ein Stabilisator bzw. eine Stabilisatoranordnung verbindet die Aufhängungselemente einer Achse eines Kraftfahrzeugs elastisch miteinander. Der Stabilisator bzw. die Stabilisatoranordnung fungiert als Drehstabfeder und gleicht einseitiges Ein- oder Ausfedern entsprechend seiner Elastizität aus. Neben passiven Stabilisatoren werden heute überwiegend aktive, semiaktive oder schaltbare Stabilisatoren eingesetzt. Als passive Stabilisatoren werden reine Torsions-Biegestäbe bzw. Drehstäbe bezeichnet. Bei aktiven Stabilisatoren ist ein Aktuator zwischen zwei Stabilisatorhälfien eingegliedert, über den aktiv auf das Wankverhalten des Fahrzeugaufbaus Einfluss genommen werden kann. Weiterhin zählen Zwischenlösungen zum Stand der Technik, wie semiaktive Stabilisatoren und schaltbare Stabilisatoren, bei denen ein schaltbares Element zwischen zwei Stabilisatorhälften angeordnet ist.

Die Verbindung zwischen Stabilisatorabschnitten und Aktuator kann unterschiedlich erfolgen. Bei dem aus der DE 199 30 444 C2 bekannten Vorschlag wird eine drehfeste Verbindung zwischen einer Rohrstabilisatorhälfte und einem Schwenkmotor über separate Kupplungsglieder realisiert. Der drehfeste Anschluss eines Kopplungsglieds an den Stabilisatorabschnitt erfolgt durch eine Stoffschlussverbindung, z. B. eine Reibschweißverbindung oder eine Laserschweißverbindung. Nachteilig an diesem Verfahren ist ein relativ hoher Produktions- und Kostenaufwand durch die Verwendung verschiedener Bauteile und Kopplungsglieder. Sowohl eine Reibschweißverbindung als auch eine Laserschweißverbindung erfordern zudem sowohl eine Nahtvor- als auch eine -nachbereitung. Weiterhin kann sich der Wärmeeintrag nachteilig auf die Dauerfestigkeit der Verbindung auswirken.

Eine Schraublösung zur Verbindung eines Stabilisatorabschnitts mit einem Aktuator zählt durch die DE 100 16 639 C1 zum Stand der Technik.

Auch die DE 102 37 103 A1 offenbart ein Verfahren zum Herstellen eines geteilten Rohrstabilisators. Hierbei werden die Enden der Stabilisatorabschnitte mittels Laserschweißen entweder direkt mit einem Gehäuseteil eines Aktuators oder mit einem Verbindungselement in Form eines Flanschbauteils verbunden. Bei einer offenbarten Ausführungsform weist das Flanschbauteil eine Zapfen auf, auf welchem ein Gehäuseteil des Gehäuses des Schwenkmotor aufgeschoben ist. Um eine Überbeanspruchung der Schweißnähte im Fahrbetrieb bei der Übertragung hoher Drehmomente zu vermeiden, wird vorgeschlagen, auf einen großen Durchmesser der Schweißfügung zu achten. Jedoch weist die dazu vorgeschlagene Schweißverbindung bei den im Betrieb auftretenden wechseldynamischen Beanspruchungen nicht die besten Lebenserwartungen auf.

Die DE 10 2004 057 429 B4 offenbart ein Verfahren zum Herstellen einer Stabilisatoranordnung mit einem zwei Stabilisatorabschnitte miteinander koppelnden Aktuator in Form eines Schwenkmotors, bei dem die Stabilisatorabschnitte direkt an den Schwenkmotor durch thermisches Fügen gekoppelt werden. Die Stabilisatorabschnitte sind als Rohrkörper ausgeführt. Das Verfahren sieht vor, die mit den Anschlussteilen des Schwenkmotors zu verbindenden Rohrenden mit einem Dorn in einem Arbeitsschritt aufzuweiten und unter Vergrößerung der Wanddicke der Rohrenden zu stauchen. Nach einer Wärmebehandlung werden die aufgeweiteten und gestauchten Rohrenden mit vergrößerter Wanddicke stoffschlüssig mit den jeweiligen Anschlussteilen des Schwenkmotors verbunden. Die stoffschlüssige Verbindung soll insbesondere durch Schweißen hergestellt werden. Schmelzschweißlösungen sind jedoch nachteilig, insbesondere wegen der herabgesetzten Dauerfestigkeit der Verbindung durch das flüssige Schweißgut. Generell erfordert eine schweißtechnische Verbindung ein entsprechendes Gerät und Betriebsstoffe sowie eine Nahtvorbereitung.

Die DE 100 14 552 C1 offenbart eine Stabilisatoranordnung bei einem Kraftfahrzeug zur Koppelung von zwei Rädern einer Fahrzeugachsenlinie. Die Anordnung weist zwei über einen Aktuator gekoppelte, jeweils einem Rad zugeordnete Stabilisatorteile auf. Ein Stabilisatorteil weist dabei einen Rohrkörper und ein am Ende des Rohrkörpers festgelegtes Flanschbauteil auf. Flanschbauteil und Rohrkörper können dabei reib-drück-technisch verschweißt sein. Flanschbauteil und Rohrkörper werden dabei stumpf aufeinander gesetzt und miteinander verbunden. Dadurch ist der Verbindungsbereich sehr klein gehalten und im Fahrbetrieb erhöhten Belastungen ausgesetzt. Daher wird auch als besonders vorteilhafte Ausgestaltung eine Einstückigkeit von Flanschbauteil und Stabilisatorteil herausgestellt.

Die DE 42 25 435 A1 betrifft ein Verfahren und eine Vorrichtung zum Reibschweißen zweier Werkstücke mit unterschiedlichen Querschnittskonturen, von denen eines als Rohrteil ausgebildet ist. Dabei soll beispielsweise eine Verbindung zwischen einem Rechteckrohr und einem massiven Zylinder hergestellt werden.

Der Erfindung liegt ausgehend vom Stand der Technik die Aufgabe zugrunde, eine einfach aufgebaute und kostengünstige Stabilisatoranordnung zu schaffen sowie ein Verfahren zur kostengünstigen Herstellung von Stabilisatorabschnitten für eine solche Stabilisatoranordnung aufzuzeigen.

Die Lösung des gegenständlichen Teils der Aufgabe besteht in einer Stabilisatoranordnung gemäß den Merkmalen von Anspruch 1.

Der verfahrensmäßige Teil der Aufgabe wird durch ein Verfahren gemäß Anspruch 6 gelöst.

Vorteilhafte Ausgestaltungen und Weiterbildungen der erfindungsgemäßen Stabilisatoranordnung sind Gegenstand der abhängigen Ansprüche 2 bis 5. Vorteilhafte Ausgestaltungen und Weiterbildungen des erfindungsgemäßen Verfahrens zeigen die abhängigen Ansprüche 7 bis 10 auf.

Die erfindungsgemäße Stabilisatoranordnung umfasst einen Aktuator und mindestens einen Stabilisatorabschnitt, wobei der Stabilisatorabschnitt einen Rohrkörper und ein an einem Ende des Rohrkörpers festgelegtes Flanschbauteil aufweist. Das Flanschbauteil und der Rohrkörper sind reibdrücktechnisch verschweißt. Erfindungsgemäß besitzt das Flanschbauteil einen Zapfen, auf welchen das des Rohrkörpers aufgeschoben ist.

Das Flanschbauteil und der Rohrkörper werden relativ zueinander gedreht und axial aufeinander zu bewegt, wobei der Zapfen des Flanschbauteils und das Ende des Rohrkörpers in Reibkontakt stehend, aufeinander gedrückt und reibverschweißt werden.

Beim Reib-Drücken handelt es sich um eine Kombination der Prozesse Reibschweißen und Drücken. Durch eine Relativbewegung des Flanschbauteils und des Rohrkörpers, insbesondere eine rotierende Relativbewegung der beiden Bauteile, während diese in Reibkontakt stehen, wird der Werkstoff von Flanschbauteil und/oder Rohrkörper im Kontaktbereich erwärmt und in einen mehr oder weniger teigigen Zustand gebracht bzw. plastifiziert, Unter Axialkrafteinwirkung werden das Flanschbauteil und das Ende des Rohrkörpers aufeinander zu bewegt. Bei dieser Axialbewegung wird das Ende des Rohrkörpers insbesondere aufgeweitet und auf den Zapfen geschoben. Kurz vor Erreichen der Endposition, also vor Beendigung des Fügevorgangs, wird die Rotationsbewegung gestoppt, während noch eine kleine axiale Zustellbewegung um ein vorgegebenes Maß stattfindet. In Folge dessen findet eine eibschweißverbindung im Bereich größerer Aufweitung statt, während der unmittelbare Übergangsbereich vom Rohrkörper bzw. Ende des Rohrkörpers zum Flanschbauteil am freien Ende des Zapfens relativ kalt bleibt. Hierdurch kann eine hohe Dauerfestigkeit der Verbindung sichergestellt werden.

Man erhält in rationeller und kostengünstiger Weise qualitativ hochwertige Stabilisatorabschnitte mit definiert ausgeformten Übergang und Fügebereich zwischen Rohrkörper und Flanschbauteil. Entsprechend rationell und kostengünstig ist die Stabilisatoranordnung.

Durch die erfindungsgemäß vorgesehene Verbindung zwischen Flanschbauteil und Rohrkörper kann ein kontinuierlicher, fließender Übergang vom torsionsbelasteten Rohrkörper zum Flanschbauteil erzeugt werden. Dieser Übergang wirkt sich hinsichtlich der Krafteinleitung beim Verdrehen des Rohrabschnitts ausgesprochen positiv auf die Spannungsverteilun im Stabilisatorabschnitt aus. Die Verbindung zwischen Rohrkörper und Flanschbauteil ist hochstabil und durch einen gleichmäßigen Spannungsverlauf unter Last gekennzeichnet. Zusätzliche Verbindungsmittel entfallen.

Das Ende des Rohrkörpers kann eine variierende Wandstärke besitzen, insbesondere aufgestaucht sein. Die Wandstärke des Rohrkörpers im Aufweitbereich wird entsprechend den Erfordernissen der Belastung und der Werkstoffe eingestellt. Der Zapfen kann hohlzylindrisch ausgeführt sein. Falls ein dichtes Rohrende gefordert ist, wird der Zapfen nicht hohl, sondern massiv ausgeführt,

Bei einer für die Praxis besonders vorteilhaften Ausführungsform verjüngt sich der Zapfen zu seine freien Ende hin. Die Geometrie im Fügebereich, also im Reib- und Aufweitbereich des Flansches, wird entsprechend der gewünschten Überlagerung aus Aufweiten und Reibschweißen gewählt. Insbesondere kann der Zapfen kegelförmig ausgeführt sein. Als zweckmäßig werden Kegelwinkel im Bereich zwischen 10° und 30° angesehen. Die Verjüngung des Zapfens kann aber auch traktrixförmig gestaltet sein. Hierbei ist die Form des Zapfens entsprechend einer Ziehkurve so ausgelegt, dass die Wandstärke des Endes des Rohrkörpers im Aufweitbereich konstant gehalten wird. Es ist auch möglich, das Ende des Rohrabschnitts aufzustauchen und zu verdicken. Soll eine Aufstauchun der Rohrwandstärke erreicht werden, ist eine Geometrie des Zapfens einzustellen, die sich aus der Rotation eines Abschnitts einer Ellipse, eines Arkuskotangens oder eines Kosekans um die Längsachse des Rohrkörpers ergibt.

In der Praxis sind Rohrkörper und das Flanschbauteil aus Stahl ausgeführt. Bei einer vorteilhaften Ausführungsform kann das Flanschbauteil als Gussteil ausgeführt sein mit einer mechanischen Bearbeitung im Anschlussbereich zum Aktuator, wohingegen eine mechanische Bearbeitung im Aufweitbereich, also im Bereich des Zapfens, nicht erfolgen muss. Das Flanschbauteil kann auch ein Schmiedeteil sein oder auch ein Zieh- oder Stanzteil aus einem Metallblech in entsprechender Konfiguration und Wandstärke.

Über das Flanschbauteil erfolgt der Anschluss des Stabilisatorabschnitts an den Aktuator. Der Anschluss kann unter Eingliederung eines zusätzlichen Verbindungsteils oder über die Gehäusewand des Aktuators erfolgen. Bei einer vorteilhaften Ausgestaltung bildet das Flanschbauteil eine stirnseitige Abdeckung des Aktuator. Die Flanschplatte des Flanschbauteils kann derart ausgestaltet sein, dass sie nicht nur mit dem Aktuatorgehäuse koppelbar ist, sondern gleichzeitig auch eine Stirnwand des Aktuatorgehäuses bildet. Hierzu ist der Außendurchmesser der Flanschplatte dem Außendurchmesser des Aktuatorgehäuses angepasst. Es ist natürlich ebenso möglich, eine Stirnwand des Aktuatorgehäuses mit entsprechenden Koppelmitteln zur Aufnahme des Flansches zu versehen.

Als besonders vorteilhaft erweist sich bei dem erfindungsgemäßen Verfahren, dass keine speziellen Werkzeuge oder Maschinen für den Fügevorgang notwendig sind. Der Fügevorgang kann in den Bearbeitungsprozess des Flanschbauteils integriert werden. Beim Aufweiten des Rohrendes kann auch eine Wandstärkenzunahme bei gleichzeitiger Verkürzung des Rohrkörpers erfolgen. Mithin wird das Rohrende im Fügebereich gestaucht. Dies kann zu einer Erhöhung der Dauerfestigkeit der Stabilisatoranordnung beitragen.

Besonders vorteilhaft kann die Verbindung durch Drehen und eine axiale Bewegung (Zustellen) des Rohrkörpers zum Flanschbauteil erfolgen, wenn der Rohrkörper noch nicht gebogen ist. Möglich ist auch eine Relativbewegung zwischen Rohrkörper und Flanschbauteil durch Drehen und Zustellen des Flanschbauteils relativ zum Rohrkörper, insbesondere wenn der Rohrkörper schon gebogen ist.

Flanschbauteil und/oder Rohrkörper können vergütet sein. Der Fügevorgang kann auch an vergüteten Bauteilen erfolgen, da die entstehende Prozesswärme zu einer erhöhten Umformbarkeit (Aufweiten) beiträgt. Als weiterhin vorteilhaft erweist sich, dass die Fügung, also die Verbindung zwischen Flanschbauteil und Rohrkörper druckdicht ist.

Aufgrund der Bauteilausführung ist eine Selbstzentrierung von Flanschbauteil und Rohrkörper gegeben. Der Fügeprozess kann relativ gut Bauteiltoleranzen ausgleichen, da der Fügevorgang erfolgt, während der Werkstoff im teigigen, piastifizierten Zustand ist.

Die Erfindung ist nachfolgend anhand von Zeichnungen beschrieben. Es zeigen:
- Figur 1: ein Flanschbauteil und einen Rohrkörper eines Stabilisatorabschnitts einer erfindungsgemäßen tabilisatoranordnun vordem Fügevorgang;
- Figur 2: Flanschbauteil und Rohrkörper nach dem Fügevorgang und
- Figur 3: einen vergrößerten Ausschnitt aus dem Fügebereich zwischen Flanschbauteil und Rohrkörper.

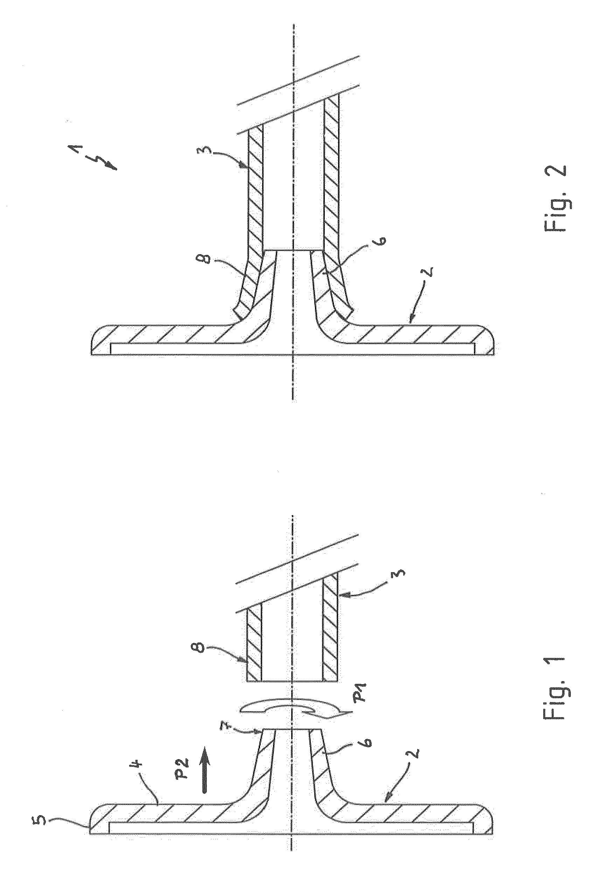

Anhand der Figuren 1 bis 3 ist ein erfindungsgemäßer Stabilisatorabschnitt 1 für eine Kraftfahrzeug-Stabilisatoranordnung und das Verfahren zu dessen Herstellung beschrieben.

Eine erfindungsgemäße aktive Stabilisatoranordnung umfasst einen hier nicht dargestellten Aktuator, beispielsweise einen Stellmotor, an dem beidseitig ein Stabitisatorabschnitt 1 angeschlossen ist. Von den Stabilisatorabschnitten 1 ist hier nur einer dargestellt. Der Stabilisatorabschnitt 1 umfasst ein Flanschbauteil 2 und einen mit dem Flanschbauteil 2 gefügten Rohrkörper 3. Das Flanschbauteil 2 besitzt eine Flanschplatte 4 mit einer äußeren umlaufenden, kranzartigen Umstellung 5 und einem zentrisch angeordneten Zapfen 6. Der Zapfen 6 ist hohl und verjüngt sich konisch bzw. kegelförmig zu seinem freien Ende 7 hin.

Sowohl das Flanschbauteil 2 als auch der Rohrkörper 3 bestehen aus Stahl, Hierbei kann das Flanschbauteil 2 als Gussbauteil ausgeführt sein.

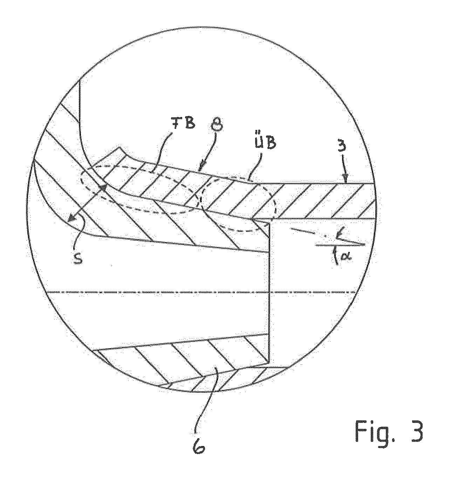

Der Rohrkörper 3 ist mit seinem Ende 8 auf den Zapfen 6 aufgeschoben und mit dem Flanschbauteil 2 gefügt und zwar reib-drück-technisch verschweißt. Hierzu werden das Flanschbauteil 2 und der Rohrkörper 3 in Position gebracht und relativ zueinander gedreht und axial aufeinander zu bewegt. Im dargestellten Ausführungsbeispiel wird das Flanschbauteil 2 rotierend bewegt. Die Rotationsbewegung ist durch den Pfeil P1 gekennzeichnet. Durch eine axiale Zustellbewegung entsprechend dem Pfeil P2 wird der Zapfen 6 des Flanschbauteils 2 unter Axialkrafteinwirkung in das Ende 8 des Rohrkörpers bewegt. Dabei wird das Ende 8 des Rohrkörpers 3 durch die Reibung in der Kontaktzone erwärmt und in einen mehr oder weniger teigigen Zustand gebracht. Bei einem weiteren Zustellen bzw. bei weiterer Axialbewegung des Flanschbauteils 2 wird das Ende 8 aufgeweitet und der Anschlussbereic am Zapfen 6 des Flanschbauteils 2 erwärmt. Der Zapfen 6 und das Ende 8 werden so in Reibkontakt stehend aufeinander gedrückt und reibverschweißt. Kurz vor Erreichen der Endposition wird die Rotationsbewegung des Flanschbauteils 2 gestoppt, während noch eine kleine axiale Zustellbewegung in Richtung des Pfeils P2 um ein vorgegebenes Maß stattfindet. Somit findet die Reibverschweißung im Bereich größerer Aufweitung statt, während der unmittelbare Übergangsbereich vom Rohrkörper 3 relativ kalt bleibt und somit eine hohe Dauerfestigkeit der Verbindung sichergestellt wird. Anhand der Figur 3 wird dies schematisch verdeutlicht. Mit FB gekennzeichnet ist der Fügebereich bzw. der Bereich der Reibschweißverbindung mit relativ hohem Wärmeeintrag. Der Bereich ÜB am Übergang zwischen Rohrkörper und freiem Ende des Zapfens ist moderat aufgeweitet. Hier erfolgt nur ein geringer Wärmeeintrag.

Mit s gekennzeichnet ist die Wandstärke des Flanschbauteils 2 im Reib-/Aufweitbereich. Die Wandstärke s des Aufweitebereichs wird entsprechend den Erfordernissen der Belastung und der Werkstoffe eingestellt. Es versteht sich, dass der Zapfen auch massiv ausgeführt sein kann. Die Geometrie des Reib- und Aufweitebereichs wird entsprechend der gewünschten Überlagerung aus Aufweiten und Reibschweißen gewähit. Im hier dargestellten Ausführungsbeispiel ist der Zapfen 6 kegelförmig ausgeführt mit einem Kegelwinkel α, der zweckmäßigerweise zwischen 10° und 30° liegen kann.

Ein erfindungsgemäßer Stabilisatorabschnitt 1 kommt bei der Herstellung einer aktiven Stabilisatoranordnung zur Anwendung. Der Stabilisatorabschnitt 1 ist rationell und kostengünstig in der Herstellung. Zudem ist er von hoher Qualität. Entsprechende Vorteile weist auch die komplette Stabilisatoranordnung auf. Über die Flanschplatte 4 des Flanschbauteils 2 erfolgt die Kopplung mit dem Aktuator. Hierbei kann die Flanschplatte 4 eine stirnseitige Abdeckung bzw. eine Stirnwand des Aktuators bilden.

### Bezugszeichen:

- 1 -: Stabilisatorabschnitt
- 2 -: Flanschbauteil
- 3 -: Rohrkörper
- 4 -: Flanschplatte
- 5 -: Umstellung
- 6 -: Zapfen
- 7 -: freies Ende v. 6
- 8-: Ende v. 3

- FB -: Fügebereich
- ÜB -: Übergangsbereich
- α -: Winkel
- P1 -: Rotationsbewegung
- P2 -: Axialbewegung
- s -: Wandstärke v. 2

## Patentansprüche

1. Stabilisatoranordnung, umfassend einen Aktuator und mindestens einen Stabilisatorabschnitt (1), wobei der Stabilisatorabschnitt (1) einen Rohrkörper (3) und ein an einem Ende (8) des Rohrkörpers (3) festgelegtes Flanschbauteil (2) aufweist, wobei das Flanschbauteil (2) und der Rohrkörper (3) reib-drück-technisch verschweißt sind, **dadurch gekennzeichnet, dass** das Flanschbauteil (2) einen Zapfen (6) besitzt, auf weichen das Ende (8) des Rohrkörpers (3) aufgeschoben ist.

2. Stabilisatoranordnung nach Anspruch 1, **dadurch gekennzeichnet, dass** der Zapfen (6) sich zu seinem freien Ende (7) hin verjüngt.

3. Stabilisatoranordnung nach Anspruch 1 oder 2, **dadurch gekennzeichnet, dass** das Ende (8) des Rohrkörpers (3) aufgeweitet ist.

4. Stabilisatoranordnung nach wenigstens einem der Ansprüche 1 bis 3, **dadurch gekennzeichnet, dass** das Ende (8) des Rohrkörpers (3) eine variierende Wandstärke besitzt, insbesondere aufgestaucht ist.

5. Stabilisatoranordnung nach wenigstens einem der Ansprüche 1 bis 4, **dadurch gekennzeichnet, dass** das Flanschbauteil (2) eine stirnseitige Abdeckung des Aktuators bildet.

6. Verfahren zur Herstellung eines Stabilisatorabschnittes (1) für eine Stabilisatoranordnung, bei welchem ein Flanschbauteil (2) mit einem Ende (8) eines Rohrkörpers (3) gefügt wird, wobei das Flanschbauteil (2) und der Rohrkörper (3) relativ zueinander gedreht und axial aufeinander zubewegt werden, **dadurch gekennzeichnet, dass** das Flanschbauteil (2) einen Zapfen (6) aufweist, auf welchen das Ende (8) geschoben wird, wobei der Zapfen (6) und das Ende (8) in Reibkontakt stehend aufeinander gedrückt und reibverschweißt werden.

7. Verfahren nach Anspruch 6, **dadurch gekennzeichnet, dass** das Ende (8) des Rohrkörpers (3) beim Fügevorgang aufgeweitet wird.

8. Verfahren nach Anspruch 6 oder 7, **dadurch gekennzeichnet, dass** die Rotationsbewegung (P1) vor Beendigung des Fügevorgang gestoppt wird, während die Axialbewegung (P2) von Flanschbauteil (2) und Rohrkörper (3) relativ zueinander um ein vorgegebenes Maß fortgeführt wird.

9. Verfahren nach einem der Ansprüche 6 bis 8, **dadurch gekennzeichnet, dass** das die Wandstärke des Endes (8) des Rohrkörpers (3) beim Fügevorgang konstant gehalten wird.

10. Verfahren nach einem der Ansprüche 6 bis 8, **dadurch gekennzeichnet, dass** die Wandstärke des Endes (8) des Rohrkörpers (3) beim Fügevorgang zumindest bereichsweise verändert wird.
